(19) Europäisches Patentamt
European Patent Office
Office européen des brevets

(11) **EP 2 255 368 B1**

(12) **FASCICULE DE BREVET EUROPEEN**

(45) Date de publication et mention
de la délivrance du brevet:
**06.05.2015  Bulletin 2015/19**

(21) Numéro de dépôt: **09712937.3**

(22) Date de dépôt: **12.02.2009**

(51) Int Cl.:
*H01G 4/38* (2006.01)      *H01G 11/24* (2013.01)
*H01G 11/72* (2013.01)

(86) Numéro de dépôt international:
**PCT/EP2009/051668**

(87) Numéro de publication internationale:
**WO 2009/103661 (27.08.2009 Gazette 2009/35)**

(54) **SUPERCONDENSATEUR DOUBLE COUCHE MULTI-ELECTRODES**

MEHRELEKTRODEN DOPPELSCHICHTSUPERKONDENSATOR

MULTIPLE-TRACK SUPERCAPACITOR

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité:  **19.02.2008  FR 0851058**

(43) Date de publication de la demande:
**01.12.2010  Bulletin 2010/48**

(73) Titulaire: **Blue Solutions
29500 Ergué Gabéric (FR)**

(72) Inventeurs:
• **AZAIS, Philippe
F-29000 Quimper (FR)**
• **CAUMONT, Olivier
F-29000 Quimper (FR)**

• **DEPOND, Jean-Michel
F-29000 Quimper (FR)**

(74) Mandataire: **Regimbeau
139, rue Vendôme
69477 Lyon Cedex 06 (FR)**

(56) Documents cités:
**EP-A- 0 786 786          EP-A- 1 801 825
WO-A-2004/075320     CH-A- 84 526
DE-A1- 3 913 611        DE-C- 328 592
GB-A- 306 517            GB-A- 1 220 567
JP-A- 9 092 338          US-A- 6 021 039
US-A1- 2002 093 783  US-A1- 2006 221 551
US-B1- 6 493 206**

## Description

La présente invention concerne le domaine technique général des supercondensateurs, c'est-à-dire des condensateurs à double couche électrochimique (ou EDLC sigle de l'expression anglo-saxonne « *Electrochemical Double Layer Capacitor* »)

## PRESENTATION GENERALE DE L'ART ANTERIEUR

Un supercondensateur est un moyen de stockage d'énergie permettant d'obtenir une densité de puissance et une densité d'énergie intermédiaire entre celles des condensateurs diélectriques et des batteries. Leur temps de décharge est généralement de l'ordre de quelques secondes.

Un supercondensateur comprend classiquement un élément bobiné cylindrique comprenant au moins deux électrodes. Chaque électrode est fabriquée à partir d'un mélange de charbon actif (également appelé « matière active »), de noir de carbone et de polymères. Lors d'une étape dite d'extrusion, une pâte conductrice est déposée sur un collecteur d'aluminium, qui sert de collecteur de courant. Les deux électrodes sont séparées par un séparateur poreux pour éviter les courts-circuits entre les deux électrodes. Lors d'une étape dite d'imprégnation, le supercondensateur est rempli avec un électrolyte. Cet électrolyte est composé d'un sel dissous dans un solvant, généralement de l'acétonitrile. Ce sel se sépare en deux espèces chargées que l'on appelle des ions (par exemple : BF4- et TEA+).

L'épaisseur d'une électrode est typiquement de 100$\mu$m. Les ions ont une taille de l'ordre de 1/1000 de $\mu$m, c'est-à-dire 100 000 fois plus petits que l'épaisseur de l'électrode. Le charbon actif (ou matière active), est un matériau extrêmement poreux.

Lorsque qu'une tension est appliquée avec un générateur continu entre les deux électrodes du supercondensateur, les ions se déplacent dans la porosité au plus près de la surface du charbon. Plus la quantité d'ions présents à la surface du charbon est importante, plus la capacité est importante.

La quantité d'énergie stockée dans un supercondensateur dépend de la tension appliquée entre les deux électrodes et de la capacité totale du supercondensateur.

De nombreux travaux ont montrés que plus la tension de fonctionnement des supercondensateurs est élevée, plus la durée de vie est écourtée, en raison d'une génération très importante de gaz dans le supercondensateur.

Cette génération de gaz est liée à la décomposition du matériau formant l'électrolyte, cette décomposition étant fonction de la tension appliquée entre les électrodes du supercondensateur.

Par exemple, la tension de décomposition de l'acétonitrile pur est de 5.9V.

Actuellement, la tension de référence appliquée aux électrodes des supercondensateurs est de 2.7V (voir notamment WO9815962 qui enseigne à l'homme du métier que la tension d'un supercondensateur doit être limitée pour ne pas trop dégrader l'électrolyte).

Pour remédier à cet inconvénient, il est connu de connecter électriquement plusieurs supercondensateurs les uns aux autres pour former un module. Ceci permet d'augmenter la tension appliquée au module.

Afin de connecter électriquement deux supercondensateurs adjacents, on utilise des moyens de connexion comprenant deux couvercles et une barrette.

Chaque couvercle est apte à coiffer un supercondensateur respectif de sorte à être connecté électriquement à celui-ci, par exemple par soudure.

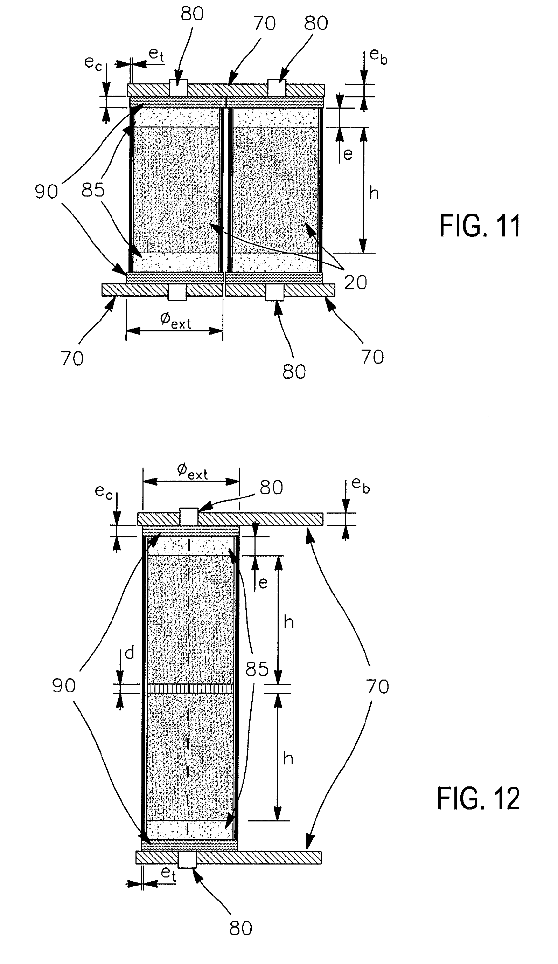

Comme l'illustre la figure 11, chaque couvercle 90 comprend en outre une borne de connexion 80 apte à venir en contact avec un alésage traversant de la barrette 70, de sorte à relier électriquement les deux supercondensateurs 20 adjacents.

Toutefois, de tels supercondensateurs présentent des inconvénients.

Notamment, le volume et la masse de deux supercondensateurs connectés électriquement par une barrette et deux couvercles sont importants.

Par ailleurs, le coût de fabrication lié à l'achat et au montage des barrettes et des couvercles pour la connexion de deux supercondensateurs est important.

Egalement, la résistance série Rs entre deux supercondensateurs connectés électriquement - qui correspond à la somme des résistances des supercondensateurs et des moyens de connexion (barrette + couvercle + soudure) - est importante.

Le document US 2006/221551 décrit un condensateur haute tension à double couches électrochimiques.

Le document WO2004/075320 décrit un ensemble d'accumulateur composé d'une pluralité de cellules connectées en série.

Le document EP 0 786 786 décrit un condensateur à double couches comprenant deux électrodes et un électrolyte liquide, l'une des électrodes étant en carbone fibreux et l'autre électrode étant en oxyde de nickel.

Le document EP 1 801 825 décrit un condensateur comprenant une pluralité d'électrodes parallèles, chaque électrode étant composée d'une ou plusieurs couches formées et étant séparée d'une autre électrode par un diélectrique.

Le document CH 84 526 décrit un condensateur électrique tubulaire constitué d'unités disposées à la suite les unes des autres sur un support diélectrique commun.

Le document DE 39 13 611 décrit un condensateur à films enroulés.

Le document US 6 493 206 décrit un condensateur incluant des feuilles métallisées enroulées en spire et décalées les unes par rapport aux autres.

Le document US 2002/093783 décrit un condensateur à double couches électrochimiques comportant des électrodes en poudre de carbone.

Le but général de l'invention est de proposer un supercondensateur, dont la durée de vie est augmentée à la tension de référence.

Un autre but de la présente invention est de proposer un supercondensateur dans lequel la génération de gaz est limitée.

Un autre but de la présente invention est de proposer un supercondensateur apte à supporter une tension supérieure à la tension de référence sans subir de dégradation.

PRESENTATION DE L'INVENTION

A cet effet, on prévoit un supercondensateur **tel que défini à la revendication 1**.

On appelle « complexe » l'association d'un collecteur de courant et d'au moins une électrode, le collecteur de courant et l'électrode ayant une surface conductrice électriquement en commun.

On appelle « complexes juxtaposés » deux complexes coplanaires (avant l'enroulement en spire pour former un élément bobiné) et séparés par un espace isolant électronique de largueur d. En d'autres termes, on entend par « complexes juxtaposés » deux complexes espacés d'une distance d selon une direction parallèle à l'axe longitudinal (i.e. l'axe d'enroulement) de l'élément bobiné.

On appelle « complexe commun » toute association de complexes en continuité électronique.

Le/les séparateur(s) déborde(nt) des électrodes de chaque complexe en regard mais pas des collecteurs des complexes servant de connexion vers l'extérieur.

Des aspects préférés mais non limitatifs du supercondensateur selon l'invention sont **décrits dans les revendications dépendantes**.

**PRESENTATION DES FIGURES**

D'autres caractéristiques, buts et avantages de la présente invention ressortiront encore de la description qui suit, laquelle est purement illustrative et non limitative et doit être lue en regard des dessins annexés sur lesquels :

- les figures 1 à 10 illustrent différents modes de réalisation d'un supercondensateur selon l'invention,
- la figure 11 illustre un module de l'art antérieur,
- la figure 12 illustre un mode de réalisation du supercondensateur selon l'invention une fois les différents éléments le constituant enroulés ensemble pour former un élément bobiné,
- les figures 13a à 13c représentent les volumes occupés par respectivement 12 supercondensateurs de l'art antérieur, six supercondensateurs bipistes selon l'invention, et quatre supercondensateurs tripistes selon l'invention.

**DESCRIPTION DE L'INVENTION**

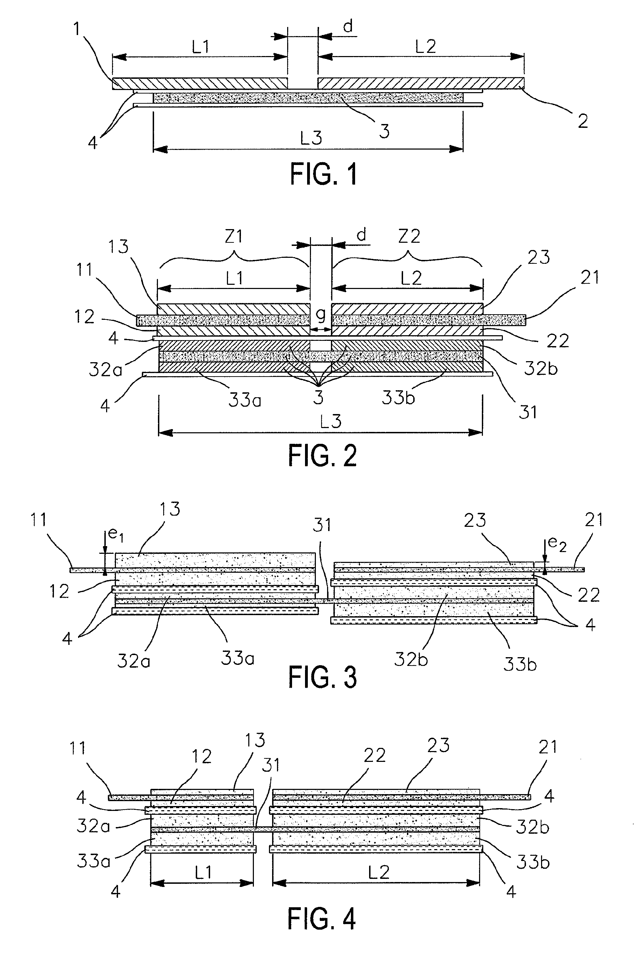

On va maintenant décrire différents modes de réalisation du supercondensateur selon l'invention en référence aux figures 1 à 13. Dans ces différentes figures, les éléments équivalents du supercondensateur portent les mêmes références numériques.

En référence à la figure 1, on a illustré les différents éléments d'un premier mode de réalisation du supercondensateur.

Le supercondensateur comprend deux complexes juxtaposés 1, 2 espacés d'une distance d.

Avantageusement, la distance d entre les complexes juxtaposés 1, 2 est prévue suffisante pour isoler électriquement les complexes juxtaposés 1, 2 l'un de l'autre.

Le supercondensateur comprend également un complexe 3, dit « *complexe commun »,* disposé en regard des deux complexes juxtaposés 1, 2.

Le supercondensateur comprend de plus deux séparateurs 4. Les séparateurs 4 permettent d'isoler électriquement les complexes juxtaposés 1, 2 du complexe commun 3. L'un des séparateurs est disposé entre le complexe commun et les complexes juxtaposés. L'autre séparateur est disposé sur l'autre face du complexe commun de sorte que le complexe commun est situé entre les séparateurs.

En regard de la figure 2, chaque complexe 1, 2, 3 comprend un collecteur de courant 11, 21, 31 et une électrode 12, 22, 32 (l'électrode 32 étant représentée sur la figure par ses deux parties 32a et 32b) ayant une face électriquement conductrice en commun avec le collecteur de courant.

Les zones Z1 et Z2 en regard des complexes juxtaposés et commun définissent deux cellules de supercondensateur dont les capacités sont déterminées par leurs largeurs respectives. La continuité du complexe commun 3 permet la mise en série des deux cellules de supercondensateur.

Les complexes 1, 2, 3 et séparateurs 4 sont respectivement constitués d'une ou plusieurs feuilles superposées.

Avantageusement, les complexes juxtaposés 1, 2, le complexe commun 3 et les séparateurs 4 sont enroulés ensemble en spire pour former un élément bobiné.

La solution proposée est moins coûteuse que les supercondensateurs de l'art antérieur décrits précédemment. En effet, le nombre de barrettes, de couvercles, et de tubes (servant de logement aux éléments bobinés) pour connecter électriquement deux cellules de supercondensateur est inférieur au nombre de barrettes, de couvercles et de tubes nécessaire pour la connexion électrique de plusieurs supercondensateurs de l'art antérieur.

Par ailleurs, la solution proposée ci-dessus permet de diminuer la résistance série Rs du système (par la diminution du nombre de couvercles et barrettes nécessaires pour connecter les cellules de supercondensateur par rapport au nombre de couvercles et de barrettes nécessaires pour connecter deux supercondensateurs adjacents de l'art antérieur), et d'augmenter de façon importante l'énergie admissible par unité de volume tout en optimisant la capacité.

Les avantages liés à l'élimination des barrettes et couvercles pour connecter deux cellules de supercondensateur en série sont les suivants :

- Accroissement de la tension unitaire de l'enroulement mais sans gain d'énergie totale stockée, a priori
- Optimisation des connexions interbobinages
- Diminution de la résistance Rs entre deux cellules de supercondensateur connectées en série,
- Diminution de masse par rapport à deux supercondensateurs de l'art antérieur connectés en série,
- Diminution du volume par rapport à deux supercondensateurs de l'art antérieur connectés en série,
- Donc accroissement des densités volumiques et massiques des énergies et des puissances,
- Non diminution du volume libre interne par rapport à une association série de supercondensateurs de l'art antérieur monopiste (standards),
- Gain de temps d'un point de vue procédé de fabrication (n cellules dans un seul supercondensateur).

Dans le mode de réalisation illustré à la figure 1, chaque complexe juxtaposé 1, 2 déborde à une extrémité respective de l'élément bobiné de sorte à être connecté électriquement avec l'extérieur. L'un 1 des complexes juxtaposés 1, 2 est utilisé en tant qu'anode du supercondensateur et l'autre 2 est utilisé en tant que cathode du supercondensateur.

Le complexe commun 3 n'est pas relié à l'extérieur, et est moins large que les séparateurs 4. L'homme du métier comprend alors aisément que le complexe commun 3 joue le rôle :

- de cathode pour le complexe juxtaposé 1 utilisé en tant qu'anode,
- d'anode pour le complexe juxtaposé 2 utilisé en tant que cathode.

La figure 2 est une représentation détaillée du schéma général illustré à la figure 1.

Avantageusement, chaque complexe 1, 2, 3 peut comprendre deux électrodes 12, 13, 22, 23, 32, 33 opposées de part et d'autre du collecteur de courant 11, 21, 31. Chaque électrode 12, 13, 22, 23, 32 (l'électrode 32 étant représentée sur la figure par ses deux parties 32a et 32b espacées d'une distance g), 33 (le complexe commun 3 comprend lui aussi deux électrodes juxtaposées 33a, 33b espacées également d'une distance g sur la figure, la distance g pouvant être supérieure ou égale à la distance d) a une surface conductrice électriquement en commun avec une face respective du collecteur de courant 11, 21, 31.

Ceci permet de doubler la quantité de matière active du supercondensateur ainsi formé, donc d'augmenter la capacité volumique de celui-ci et en conséquence d'augmenter l'énergie admissible par le supercondensateur.

Ceci permet de faciliter l'enroulement en spire des complexes et des séparateurs.

Chacune de ces électrodes 32a, 32b fait face à une électrode 12, 22 respective des complexes juxtaposés 1, 2.

Le complexe commun 3 comprend également deux autres électrodes 33a, 33b opposées aux deux électrodes juxtaposées 32a, 32b. Ces deux autres électrodes sont en contact électrique avec l'autre face du collecteur de courant 3.

Plus précisément chacune des autres électrodes 33a, 33b est respectivement opposée à une des électrodes juxtaposées 32a, 32b du complexe commun 3.

En d'autres termes, le complexe commun 3 comprend quatre électrodes 32a, 32b, 33a, 33b juxtaposées deux à deux et disposées de façon symétrique par rapport au collecteur de courant 31 du complexe commun 3.

L'espace g entre les électrodes 32a/32b, 33a/33b du complexe commun 3 peut être réalisé au moyen d'un masque disposé de part et d'autre du collecteur de courant 31 lors de l'enduction (ou de l'extrusion) de matière active sur le collecteur 31, le masque étant retiré en continu lors du procédé de fabrication du complexe commun.

Dans un mode de réalisation, les électrodes des différents complexes 1, 2, 3 sont identiques. En d'autres termes, les électrodes des différents complexes présentent des longueurs égales, des largeurs égales, des épaisseurs égales et sont réalisées dans un même matériau.

Ceci permet d'obtenir un supercondensateur symétrique à deux pistes.

Toutefois, les électrodes des différents complexes 1, 2, 3 peuvent être différentes (en termes de longueur et/ou largeur et/ou épaisseur et/ou nature du matériau les constituant).

Ceci permet d'obtenir un supercondensateur dissymétrique, c'est-à-dire un supercondensateur dans lequel le volume de l'anode du supercondensateur est différent du volume de la cathode du supercondensateur.

Le fait de travailler avec un supercondensateur dissymétrique permet d'optimiser :

- la capacité du supercondensateur d'une part, et
- le vieillissement du supercondensateur d'autre part, en raison d'un meilleur contrôle du potentiel de chaque électrode.

La dissymétrie du supercondensateur peut être obtenue par exemple en faisant varier l'épaisseur des électrodes sur les complexes juxtaposés, ou en faisant varier la largeur des électrodes, de sorte que les électrodes positives et négatives aient des volumes différents.

En référence à la figure 3, on a illustré un mode de réalisation dans lequel anodes et cathodes du supercondensateur sont dissymétriques. Les complexes juxtaposés 1, 2 comprennent chacun deux électrodes 12, 13 et 22, 23. Le complexe commun 3 comprend également quatre électrodes 32a, 32b, 33a, 33b.

Les électrodes 12, 13 du premier 1 des complexes juxtaposés 1, 2 sont chacune d'une première épaisseur e1 et les électrodes 22, 23 du deuxième 2 des complexes juxtaposés 1, 2 sont chacune d'une deuxième épaisseur e2 différente de la première épaisseur e1.

De plus, les électrodes 32a, 33a du complexe commun 3 en regard du premier 1 des complexes juxtaposés 1, 2 sont chacune d'épaisseur égale à la deuxième épaisseur e2, et les électrodes 32b, 33b du complexe commun 3 en regard du deuxième 2 des complexes juxtaposés 1, 2 sont chacune d'épaisseur égale à la première épaisseur e1.

En d'autres termes, les épaisseurs des électrodes 12, 13 et 32b, 33b formant anode sont différentes des épaisseurs des électrodes 22, 23 et 32a, 33a formant cathode.

Ceci permet d'obtenir un supercondensateur dissymétrique comprenant deux supercondensateurs de capacités a priori différentes reliés en série.

En référence à la figure 4, on a illustré un autre mode de réalisation dans lequel anodes et cathodes du supercondensateur sont dissymétriques.

Dans ce mode de réalisation, l'épaisseur de chacune des électrodes 12, 13, 22, 23 des complexes 1, 2 juxtaposés est identique.

Par ailleurs, toutes les électrodes 32a, 32b, 33a, 33b du complexe commun 3 présentent la même épaisseur.

Pour obtenir la dissymétrie, l'épaisseur d'électrode côté complexe commun 3 est différente de l'épaisseur d'électrode côté complexes juxtaposés 1, 2.

Par ailleurs, la largeur L1 des électrodes 12, 13 du premier 1 des complexes juxtaposés 1, 2 est différente de la largeur L2 des électrodes 22, 23 du deuxième 2 des complexes juxtaposés 1, 2, la largeur des électrodes 32a, 33a (respectivement 32b, 33b) du complexe commun 3 étant égale à la largeur L1 (respectivement L2) des électrodes du complexe juxtaposé 1 (respectivement 2) lui faisant face.

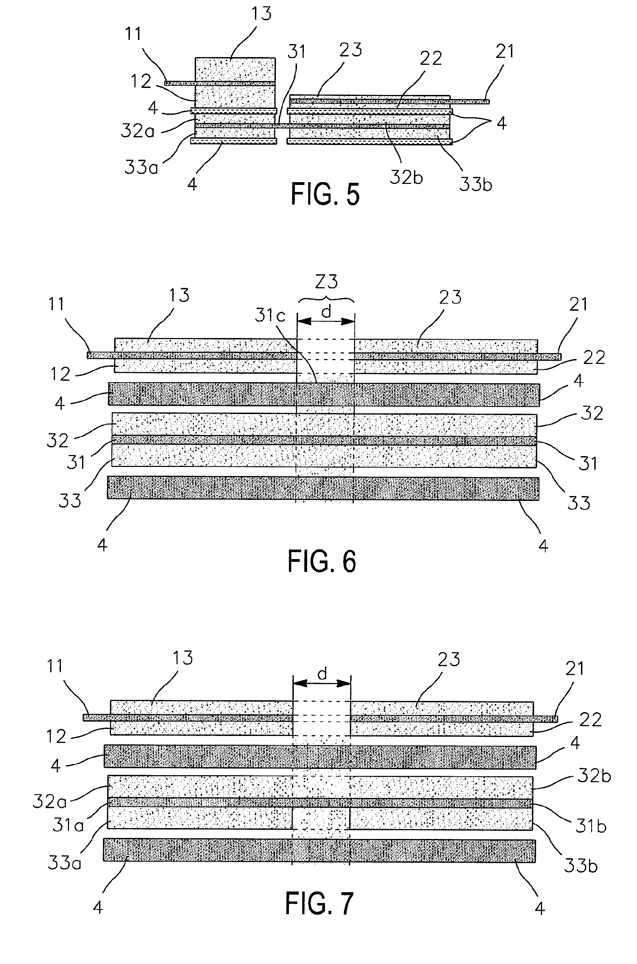

En référence à la figure 5, on a illustré un autre mode de réalisation d'un supercondensateur dissymétrique.

Dans ce mode de réalisation, les largeurs L1, L2 des électrodes 12, 13 et 22, 23 des complexes juxtaposés sont différentes, les électrodes 32a, 33a, (respectivement 32b, 33b) du complexe commun 3 étant de largeur égale à la largeur L1 (respectivement L2) des électrodes du complexe juxtaposé 1 (respectivement 2) lui faisant face.

Par ailleurs, l'épaisseur des électrodes 12, 13 du premier 1 des deux complexes juxtaposés 1, 2 est différente de l'épaisseur des électrodes 22, 23 du deuxième 2 des deux complexes juxtaposés 1, 2.

Les électrodes 32a, 32b, 33a, 33b du complexe commun 3 sont d'épaisseurs identiques. De plus, l'épaisseur des électrodes 32a, 32b, 33a, 33b du complexe commun 3 est différente des épaisseurs des électrodes 12, 13 et 22, 23 des complexes juxtaposés.

Dans ce mode de réalisation, l'épaisseur totale du premier supercondensateur - composée du premier 1 des deux complexes juxtaposés 1, 2 et de la portion de complexe commun en regard de celui-ci - est différente de l'épaisseur totale du deuxième supercondensateur - composée du deuxième 2 des deux complexes juxtaposés 1, 2 et de la portion de complexe commun en regard de celui-ci.

Pour compenser cette différence d'épaisseur totale des supercondensateurs, le supercondensateur peut comprendre des entretoises afin de faciliter l'enroulement des séparateurs 4 et des trois complexes 1, 2, 3 pour former un élément bobiné. Avantageusement, ces entretoises peuvent comprendre des couches de matériau neutre et/ou un matériau identique à celui utilisé pour les séparateurs.

Dans un autre mode de réalisation, les électrodes 12, 13, 22, 23 des complexes juxtaposés 1, 2 sont d'épaisseur identique mais sont constituées de matériaux différents de sorte à présenter des densités faradiques différentes.

On a illustré à la figure 6 un mode de réalisation dans lequel le complexe commun 3 comprend uniquement deux électrodes opposées 32, 33 disposées face aux complexes juxtaposés 1, 2. Dans ce mode de réalisation, le séparateur 4 disposé entre les complexes juxtaposés 1, 2 et le complexe commun 3 est continu.

Les électrodes 12, 22, 32, des complexes 1, 2, 3 peuvent être de largeur quelconque. Avantageusement, les électrodes opposées 13, 23, 33 de chaque complexe 1, 2, 3 sont de largeur identique.

Les collecteurs 11, 21 des complexes juxtaposés 1, 2 débordent des électrodes 12, 13, 22, 23 vers l'extérieur de sorte à permettre la connexion du supercondensateur (une fois enroulé) avec d'autres supercondensateurs.

Les séparateurs 4 débordent des électrodes 12, 13, 22, 23, 32, 33 en regard pour éviter la détérioration des électrodes des complexes 1, 2, 3.

Les complexes juxtaposés 1, 2 sont espacés d'une distance d de sorte à obtenir une zone de discontinuité électrique. Avantageusement, cette distance d est prévue suffisante pour éviter le passage direct du courant de l'un des complexes juxtaposés 1, 2 vers l'autre des complexes juxtaposés 1, 2. Par exemple, la distance d peut être supérieure à un millimètre. Une distance d de un millimètre est en effet suffisante pour éviter que le champ électrique créé entre les deux complexes juxtaposés 1, 2 soit trop important, ce qui risquerait de décomposer l'électrolyte dans des conditions normales d'utilisation du supercondensateur. En effet, la tension d'un tel système est doublée par rapport à celle d'un élément standard de l'état de la technique antérieure, et ce dans un même boîtier, de sorte que l'électrolyte est soumis à une tension double, d'où son risque de décomposition plus rapide. La distance d entre les complexes juxtaposée 1 et 2 est donc choisie de façon à éviter que l'électrolyte ne voie cette tension double.

Avantageusement, la zone Z3 définie entre les deux complexes juxtaposés 1, 2 peut comprendre un isolant électrique, par exemple du espace vide, un liquide ou un gaz. Pour que cette zone puisse être ainsi remplie, on aura judicieusement choisi le volume d'électrolyte à l'intérieur du boîtier de façon à ce qu'il imprègne seulement l'ensemble de la matière active, sans excès, afin de laisser vides les espaces vides.

La portion de collecteur 31 c du complexe commun 3 disposée en regard de la zone Z3 définie entre les deux complexes juxtaposés 1, 2 est une région de continuité électrique du complexe commun 3.

Cette région peut être formée :

- d'une portion du collecteur du complexe commun dans le cas où le complexe commun 3 comprend un seul et même collecteur, comme illustré à la figure 6, ou peut être formé
- d'une connexion électrique comme par exemple une soudure dans le cas où le complexe commun 3 comprend deux collecteurs juxtaposés 31 a, 31 b soudés entre eux, comme illustré à la figure 7.

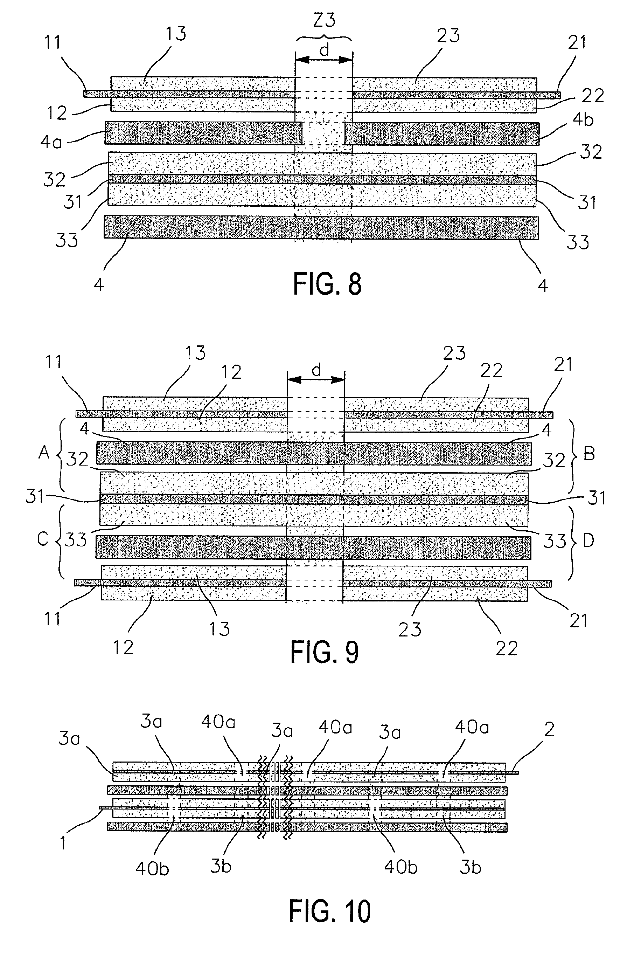

Comme illustré à la figure 8, le séparateur 4 disposé entre les complexes juxtaposés 1, 2 et le complexe commun 3 peut être discontinu, c'est-à-dire constitué de deux séparateurs juxtaposés 4a, 4b. Dans ce cas, la distance entre ces séparateurs juxtaposés 4a, 4b est avantageusement inférieure à la distance d entre les complexes juxtaposés 1, 2. Ceci permet de garantir une isolation électrique entre les électrodes 12, 22 des complexes juxtaposés 1, 2 et les électrodes 32a, 32b du complexe commun 3, et ainsi d'éviter les risques de dégradation des complexes 1, 2, 3. La zone définie entre deux séparateurs juxtaposés 4a, 4b peut comprendre tout type de matériau isolant, par exemple un espace vide, ou un gaz ou un liquide isolant.

La figure 9 illustre deux enroulements successifs du supercondensateur de la figure 6, une fois les différents complexes et séparateurs enroulés ensemble pour former un élément bobiné.

Les électrodes 12, 13, 22, 23, 32, 33 des différents complexes 1, 2, 3 forment une pluralité de supercondensateurs.

Les électrodes 12, 22 des complexes juxtaposés 1, 2 en regard de l'électrode 32 du complexe commun 3 forment, avec cette électrode 32 du complexe commun 3 et le séparateur 4 disposé entre les complexes commun 3 et juxtaposés 1, 2, des premier et deuxième supercondensateurs A, B connectés (l'un à l'autre) électriquement en série par construction de l'enroulement.

Les électrodes opposées 13, 23 des complexes juxtaposés 1, 2 et l'électrode opposée 33 du complexe commun 3 forment, avec le séparateur 4 disposé entre les électrodes opposées 13, 23, 33 des différents complexes 1, 2, 3, des troisième et quatrième supercondensateurs C, D connectés (l'un à l'autre) électriquement en série par construction de l'enroulement.

Les premier et deuxième supercondensateurs A, B sont connectés électriquement en parallèle des troisième et quatrième supercondensateurs C, D par construction de l'enroulement.

On obtient ainsi, un supercondensateur comprenant quatre supercondensateurs A, B, C, D dans le même élément bobiné.

Bien entendu, les électrodes 12, 13, 22, 23, 32, 33 des différents complexes 1, 2, 3 peuvent être composées de matières actives différentes pour obtenir une dissymétrie, tel que décrit précédemment (un mélange différent de matières actives pour les électrodes des différents complexes). On peut avantageusement utiliser des carbones activés différents pour les différentes électrodes 12, 13, 22, 23, 32, 33 en adaptant la taille des pores du carbone à la taille des ions utilisés.

On peut également jouer sur le volume des électrodes 12, 13, 22, 23, 32, 33 des différents complexes 1, 2, 3 pour obtenir une dissymétrie.

On a illustré à la figure 10 un supercondensateur comprenant un nombre n de supercondensateurs.

Le supercondensateur comprend une pluralité de complexes 1, 2, 3a, 3b disposés alternativement au dessus et au dessous du séparateur 4.

Deux complexes contigus 3a (respectivement 3b) de la pluralité de complexes sont séparés par une marge 40a (respectivement 40b) de largeur non nulle. Les marges 40a entre les complexes juxtaposés 3a situés au dessus du séparateur 4 sont décalées par rapport aux marges 40b entre les complexes juxtaposés 3b situés en dessous du séparateur 4.

La continuité électronique du complexe commun à deux complexes contigus - via une zone de connexion interne au complexe commun et disposée en regard de la marge 40 - assure la connexion série des deux supercondensateurs ainsi formés.

On obtient ainsi un supercondensateur comprenant n supercondensateurs connectés électriquement en série.

Pour les différents modes de réalisation illustrés aux figures 1 à 10, la marge 40 s'obtient durant le bobinage sur une machine à bobiner en effectuant un bobinage simultané des complexes contigus espacés de la largeur prévue pour la marge 40.

Dans le cas d'un séparateur non continu (i.e. plusieurs séparateurs juxtaposés entre les complexes juxtaposés et le complexe commun), le même procédé peut être utilisé pour réaliser l'espacement entre les séparateurs.

La largeur d de la marge 40 - correspondant à l'écartement entre les complexes juxtaposés - est obtenue mécaniquement par un positionnement adéquat des complexes au démarrage du bobinage.

La largeur « d » de la marge 40 est fonction de la matière isolante utilisée.

Si la marge 40 contient un gaz (par exemple solvant de l'électrolyte sous forme gazeuse), la tension Un, appliquée à l'élément en fonctionnement normal, doit être inférieure à « d » fois le champ de claquage du gaz.

Si la marge 40 contient un liquide, la résistance totale de la marge 40 qui est égale à $\dfrac{1}{\sigma} \times \dfrac{d}{Le_c}$, avec σ la conductivité de l'électrolyte, L la longueur totale bobinée et $e_c$ l'épaisseur de la marge 40, doit être supérieure à 1kΩ. Cette contrainte fixe la valeur admissible de la largeur d.

Si la marge 40 contient un solide (isolant électriquement), la tension Un entre les complexes juxtaposés doit être inférieure au champ de claquage du matériau isolant.

Si la marge 40 contient une structure mixte (mélange de différents matériaux et/ou différentes phases) la largeur d sera choisie comme la plus grande de toutes les valeurs.

Avantageusement, le supercondensateur peut comprendre un empilement de complexes.

Par exemple, dans un mode de réalisation, le supercondensateur comprend deux complexes juxtaposés ayant au moins un complexe commun en regard, séparé des complexes juxtaposés par un séparateur. Les complexes et le séparateur sont enroulés ensemble en spires de manière à former un premier élément bobiné. Le supercondensateur comprend également deux autres complexes juxtaposés ayant un autre complexe commun en regard, séparé par un autre séparateur. Les autres complexes et l'autre séparateur sont enroulés ensemble en spires autour du premier élément bobiné de manière à former un deuxième élément bobiné. Les premier et deuxième éléments bobinés sont séparés par un espace isolant électroniquement.

Ceci permet de diminuer le volume et la masse du supercondensateur par rapport au volume et à la masse des modules de l'art antérieur comprenant des supercondensateurs connectés électriquement par des barrettes et couvercles.

Cela permet également de diminuer le coût de fabrication lié à l'achat et au montage des barrettes et des couvercles, ainsi que la résistance série du supercondensateur ainsi obtenu.

Les supercondensateurs peuvent avoir différentes formes. Par exemple, les supercondensateurs peuvent être cylindriques.

Les supercondensateurs peuvent également avoir une base de forme hexagonale, ou triangulaire, ou octogonale, ou rectangulaire, ou encore elliptique orthogonalement à l'axe de bobinage. Ceci permet de limiter le volume mort entre deux supercondensateurs adjacents. Les angles des éléments bobinés peuvent être non-saillants.

**Cas général permettant de démontrer le gain de volume sur un système multipistes**

Comme décrit précédemment, le supercondensateur selon l'invention permet de réduire le volume associé à la connexion électrique en série de deux supercondensateurs par rapport aux modules de l'art antérieur.

Un tel module de l'art antérieur est illustré à la figure 11. Le module comprend deux supercondensateurs 20. Chaque supercondensateur 20 comprend un élément bobiné cylindrique comprenant deux électrodes et un séparateur. Une portion 85 des électrodes déborde vers l'extérieur. Les supercondensateurs sont connectés en série au moyen d'une barrette 70 de liaison et de couvercles 90. Chaque couvercle 90 coiffe un supercondensateur 20 respectif de sorte à être connecté électriquement à celui-ci au niveau de la portion 85 d'électrode débordant vers l'extérieur. Chaque couvercle 80 comprend en outre une borne 80 de connexion, apte à venir en contact avec un alésage traversant de la barrette 70, de sorte à relier électriquement en série les deux supercondensateurs 20.

En référence à la figure 12, on a illustré un exemple de supercondensateur selon l'invention formé par construction de deux supercondensateurs connectés électriquement en série. Ce supercondensateur est apte à être connecté à un supercondensateur adjacent de même type au moyen d'une barrette de liaison.

Pour démontrer le gain de volume du supercondensateur illustré à la figure 12 par rapport au module illustré à la figure 11, les paramètres suivants sont nécessaires :

h : hauteur active (cm)
e : hauteur de la portion d'électrode débordant de l'élément bobiné (cm)
$e_c$ : épaisseur du couvercle (cm)
$e_b$ : épaisseur de la barrette de liaison (cm)
$\varnothing_{ext}$ : diamètre extérieur du supercondensateur (cm)
d : largeur de la marge (avec e > d) (cm)

A partir de ces paramètres, on peut calculer les volumes du module de l'art antérieur et du supercondensateur selon l'invention :

$V_n$: volume du supercondensateur n-pistes de valeur équivalente $\dfrac{C}{n}$ (cm$^3$)

V : volume du module de l'art antérieur comprenant n supercondensateurs de valeur C en série (cm$^3$)

Pour des valeurs h, $e_c$, $\varnothing_{ext}$, e, et, $e_b$ identiques sur les figures 11 et 12, on obtient :

$$V = \varnothing_{ext}^2 \, (\pi/4) \, n \, (h + 2\,e + 2\,e_c + 2\,e_b)$$

$$V_n = \varnothing_{ext}^2 \, (\pi/4) \, (n\,h + (n\text{-}1)\,d + 2\,e + 2\,e_c + 2\,e_b)$$

La différence de volume $\Delta V$ entre le module de l'art antérieur et le supercondensateur selon l'invention est donc égale à :

$$\Delta V = \varnothing_{ext}^2 \, (\pi/4) \, (n\text{-}1) \, (2\,e + 2\,e_c + 2\,e_b - d)$$

**Cas général permettant de démontrer le gain de masse sur un système multipistes**

Pour démontrer le gain de masse du supercondensateur illustré à la figure 12 par rapport au module illustré à la figure 11, les paramètres suivants sont également nécessaire :

et : épaisseur du tube dans lequel sont disposés les éléments bobinés (cm)
$m_u$ : masse du supercondensateur C (g)
$m_c$ : masse du couvercle d'un supercondensateur de valeur C (g)
$m_b$ : masse de la barrette de liaison (g)
$\zeta$: masse volumique de la matière du tube et du couvercle (g/cm$^3$)

A partir de ces paramètres, on peut calculer les masses suivantes :

$m_t^c$ : masse du tube d'un supercondensateur de valeur C (dans un module de l'art antérieur) (g)

$m_t^{C/n}$ : masse du tube des supercondensateurs n-pistes de valeur équivalente $\dfrac{C}{n}$ (dans le supercondensateur selon l'invention) (g)

m : masse totale de n supercondensateurs de valeur C en série (dans un module de l'art antérieur) (g)

$m_n$ : masse totale des supercondensateurs n-pistes de valeur équivalente $\dfrac{C}{n}$ (dans un supercondensateur selon l'invention) (g)

Pour des valeurs h, $e_c$, $\varnothing_{ext}$, e, et, $e_b$ identiques sur les figures 11 et 12, on obtient :

$$m_t^{C} = \varnothing_{ext}\, \pi\, e_t\, (h + 2\, e + 2\, e_c)\, \zeta$$

$$m_t^{C/n} = \varnothing_{ext}\, \pi\, e_t\, (n\, h + (n\text{-}1)\, d + 2\, e + 2\, e_c)\, \zeta$$

$$m = n\, (m_u + m_t^{C} + 2\, m_c) + (n\text{-}1)\, m_b$$

$$m_n = n\, m_u + 2\, m_c + m_t^{C/n}$$

La différence de masse Δm entre le module de l'art antérieur et le supercondensateur selon l'invention est donc égale à :

$$\Delta m = (n\text{-}1)\, (2\, m_c + m_b + \varnothing_{ext}\, \pi\, e_t\, (2\, e + 2\, e_c - d)\, \zeta)$$

On suppose dans ces calculs que la masse de la bobine n-pistes est égale à n fois la masse de la bobine unitaire. On sait que cette hypothèse est pessimiste car elle n'est vraie que si d = 2 e. Dans le cas réel, e est très supérieur à d.

### *Application numérique des formules établies précédemment*

Comparaison entre un supercondensateur standard de 2600F et un supercondensateur bipiste selon l'invention de 2600F

$m_u$ = 370g
$\varnothing_{ext}$= 7 cm
C = 2600F
$e_t$=0.05cm
h = 8 cm
e = 0.7 cm
$e_c$ = 0.3 cm
$e_b$ = 0.4 cm
d = 0.4 cm
$\zeta$ = 2.7

Résultats:

$m_c$ = 30 g
$m_b$ = 15g
$m_t^{c}$ = 30 g

$m_t^{C/n}$ = 55 g

m = 935 g (masse totale de 2 supercondensateurs unis par une barrette de liaison)

$m_n$ = 855 g (masse du supercondensateur bipiste)

$V_n$ = 900 cm$^3$

V = 1020 cm$^3$

Les gains en volume et en masse du supercondensateur selon l'invention par rapport au module de l'art antérieur sont donc de : -11.7% en volume et 9% en masse.

**Exemples d'application de l'invention des éléments multipistes à la réalisation de modules**

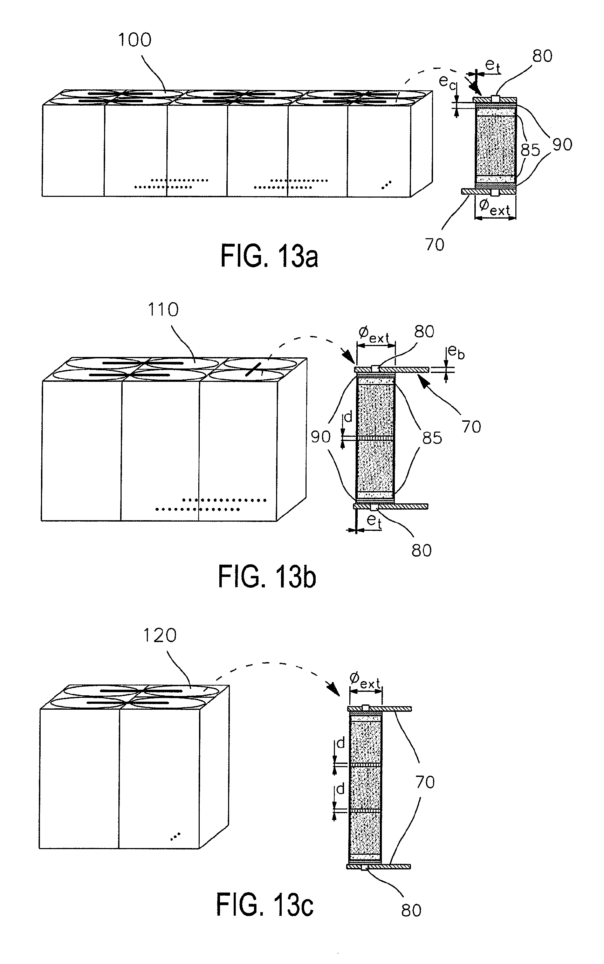

Considérons un module de 12 éléments positionnés selon la figure 13a. La masse d'un élément de 3000F est de 469g, masse incluant les couvercles et le tube. Le module comporte 11 barrettes de liaison de 15g chacune. Le diamètre des éléments est de 6,85 cm et la hauteur unitaire est de 9 cm.

Le volume des 12 supercondensateurs vaut 3980,1cm$^3$ selon le calcul :

$$V_{supercapacités} = 12 \times \pi \times 9 \times 3{,}425^2 = 3980{,}1 \text{ cm}^{3.}$$

Les supercapacités sont espacées de 2mm entre elles (pour éviter les court-circuits). L'ensemble des supercondensateurs est recouvert, en face inférieure et supérieure, d'un espace libre de 2mm puis est capoté par des plaques inférieures et supérieures de 3mm. Ces plaques sont en aluminium (d= 2,7). Les flancs du module sont constitués de tôles de 2mm d'épaisseur en aluminium (d=2,7). Le volume externe du module vaut donc :

$$V_{externe} = (6{,}85 \times 6 + 0{,}2 \times 7) \times (6{,}85 \times 2 + 0{,}2 \times 3) \times (9 + (0{,}3+0{,}2) \times 2)$$
$$= 42{,}5 \times 14{,}3 \times 10$$
$$= 6077{,}5 \text{cm}^3$$

La masse totale du module vaut donc :

$$m_{module} = (469 \times 12) + 11 \times 15 + (42{,}5 \times 14{,}3 \times 0{,}3 \times 2{,}7) \times 2 + (10 \times 42{,}5 \times 0{,}2 \times 2{,}7) \times 2 + (10 \times 14{,}3 \times 0{,}2 \times 2{,}7) \times 2$$
$$= 5628 + 165 + 985 + 459 + 154{,}5$$
$$= 7391{,}5\text{g}$$

Considérons maintenant un élément bipistes de 1500F de tension double par rapport au système décrit dans l'art antérieur. En conservant le même rapport (hauteur du bobinage) / (diamètre du bobinage) de l'élément de l'art antérieur, on obtient les paramètres de hauteur et de diamètre suivants pour l'élément bipistes :

$D_{bobinage}$ = 8,5cm

$H_{bobinage}$ = 11 cm

La masse d'un élément bipistes unitaire vaut 863g, masse incluant les deux couvercles et le tube.

Il ya maintenant, selon la figure 13b, 6 éléments bipistes reliés entre eux en série par 5 barrettes. Le module comporte 5 barrettes de liaison de 17g chacune.

Le volume des 6 supercondensateurs bipistes vaut 3745,2cm$^3$ selon le calcul :

$$V_{supercapacités} = 6 \times \pi \times 11 \times 4{,}25^2 = 3745{,}2\text{cm}^{3.}$$

Les supercapacités sont espacées de 2mm entre elles (pour éviter les court-circuits). L'ensemble des supercondensateurs est recouvert, en face inférieure et supérieure, d'un espace libre de 2mm puis est capoté par des plaques inférieures et supérieures de 3mm. Ces plaques sont en aluminium (d= 2,7). Les flancs du module sont constitués de tôles de 2mm d'épaisseur en aluminium (d=2,7). Le volume externe du module vaut donc :

$$V_{externe}= (8,5x3 + 0,2x4) \times (8,5x2 + 0,2x3) \times (11 + (0,3+0,2)x2)$$

$$=26,3 \times 17,6 \times 12$$

$$= 5554,6 cm^3$$

La masse totale du module vaut donc :

$$m_{module}= (863 \times 6) + 5 \times 17 + (26,3 \times 17,6 \times 0,3 \times 2,7) \times 2 + (12 \times 26,3 \times 0,2 \times 2,7) \times$$

$$2 + (12 \times 17,6 \times 0,2 \times 2,7) \times 2$$

$$= 5178 + 85 + 750 + 341 + 228$$

$$= 6582g$$

Considérons maintenant un élément « tripistes » de 1000F de tension triple par rapport au système décrit dans l'art antérieur. En conservant le même rapport (hauteur du bobinage) / (diamètre du bobinage) de l'élément de l'art antérieur, on obtient les paramètres de hauteur et de diamètre suivants pour l'élément tripistes :

$D_{bobinage}=9,7cm$
$H_{bobinage} = 12,3cm$

La masse d'un élément tripistes unitaire vaut 1251g, masse incluant les deux couvercles et le tube.
Il y a maintenant, selon la figure 13c, 4 éléments tripistes reliés entre eux en série par 3 barrettes. Le module comporte 3 barrettes de liaison de 20g chacune.
Le volume des 4 supercondensateurs tripistes vaut $3635,8 cm^3$ selon le calcul :

$$V_{supercapacités}= 4 \times \pi \times 12,3 \times 4,85^2 = 3635,8 cm^3$$

Les supercapacités sont espacées de 2mm entre elles (pour éviter les court-circuits). L'ensemble des supercondensateurs est recouvert, en face inférieure et supérieure, d'un espace libre de 2mm puis est capoté par des plaques inférieures et supérieures de 3mm. Ces plaques sont en aluminium (d= 2,7). Les flancs du module sont constitués de tôles de 2mm d'épaisseur en aluminium (d=2,7). Le volume externe du module vaut donc :

$$V_{externe}= (9,7x2 + 0,2x3) \times (9,7x2 + 0,2x3) \times (12,3 + (0,3+0,2)x2)$$

$$=20 \times 20 \times 13,3$$

$$= 5320 cm^3$$

La masse totale du module vaut donc :

$$m_{module}= (1251 \times 4) + 3 \times 20 + (20 \times 20 \times 0,3 \times 2,7) \times 2 + (20 \times 13,3 \times 0,2 \times 2,7) \times 2$$

$$+ (13,3 \times 20 \times 0,2 \times 2,7) \times 2$$

$$= 5004 + 60 + 648 + 287,3 + 287,3$$

$$= 6286,6g$$

Le tableau ci-dessous résume le gain en masse et en volume des modules contenant des éléments bipistes ou tripistes comparés au module décrit dans l'art antérieur. Ces gains en masse et en volume sont identiques à ceux obtenus pour l'énergie spécifique massique et volumique, car la tension totale du module n'est pas modifiée :

| Nombre d'éléments dans le module | Art antérieur : 12 éléments 100 (figure 13a) | 6 éléments 110 bipistes, selon la présente invention (cf. figure 13b) | 4 éléments 120 tripistes, selon la présente invention (cf. figure 13c) |
|---|---|---|---|
| Masse totale | 7391,5g | 6582g | 6286,6g |
| Volume total | 6077,5 cm$^3$ | 5554,6 cm$^3$ | 5320 cm$^3$ |
| Gain massique par rapport à l'état de l'art antérieur | 0% | 12,3% | 17,5% |
| Gain volumique par rapport à l'état de l'art antérieur | 0% | 9,4% | 14,2% |

*Gain en résistance total*

Le gain en résistance est dû à l'absence de barrette et de la réduction du nombre de couvercle.

Le trajet des électrons est donc diminué par rapport à l'assemblage de deux supercondensateurs distincts.

La résistance équivalente d'un assemblage de deux supercondensateurs est de l'ordre de 0.4 m$\Omega$. La résistance équivalente d'un élément bipiste est évalué à 0.2m$\Omega$.

Dans ce cas précis, la résistance est donc divisées par 2.

Le gain en résistance permet donc de pouvoir accroitre la densité de puissance ($V^2/(4R_s)$).

Les exemples mentionnés ci-dessus sont explicités précisément pour des applications aux supercondensateurs, mais le lecteur aura compris que de nombreuses modifications peuvent être apportées mutatis mutandis au supercondensateur décrit précédemment, pour s'adapter aux configurations des divers autres éléments de stockage envisagés tels que batteries ou piles, sans sortir matériellement des nouveaux enseignements et des avantages décrits ici.

Par conséquent, toutes les modifications de ce type sont destinées à être incorporées à l'intérieur de la portée du supercondensateur tel que défini dans les revendications jointes.

On a présenté ici deux types de supercondensateurs.

Le premier type de supercondensateur (ci-après dénommé « supercondensateur multipistes ») comprend au moins deux complexes juxtaposés espacés d'une distance d et au moins un complexe commun en regard des deux complexes juxtaposés et séparé de ceux-ci par au moins un séparateur, le séparateur et les complexes étant enroulées ensemble en spire pour former un élément bobiné.

Le deuxième type de supercondensateur (ci-après dénommé « supercondensateur multibobines ») comprend au moins deux complexes et au moins un séparateur entre les deux complexes, les complexes et le séparateur étant enroulés ensemble en spires de manière à former un élément bobiné, le supercondensateur multibobines étant remarquable en ce qu'il comprend en outre au moins un autre complexe et au moins un autre séparateur, l'autre complexe et l'autre séparateur étant enroulés ensemble en spires autour de l'élément bobiné de manière à former au moins un élément bobiné consécutif, ces éléments bobinés successifs étant séparés par un espace isolant électronique.

Les supercondensateurs mulipistes et multibobines présentent de nombreux avantages :

- pour un supercondensateur multipistes ou multibobines, à énergie volumique identique à celle de 2 supercondensateurs standards, on peut appliquer une tension inférieure et donc limiter très fortement la création de gaz et donc accroitre de façon très avantageuse la durée de vie,
- le volume interne d'un supercondensateur multipistes ou multibobines peut être avantageusement supérieur, par montage, au volume interne de deux supercondensateurs standards associés. Dans ce cas, la durée de vie sera également accrue.

Enfin, dans un module comprenant une pluralité de supercondensateurs connectés les uns aux autres, au moins la moitié de la résistance série du module est une résistance de connectique entre les bobines et les couvercles.

Dans un module comprenant une pluralité de supercondensateurs multipistes ou multibobines, la résistance série du module est fortement diminuée, en raison de la réduction du nombre de jonctions nécessaires entre couvercle et bobine par rapport à un module comprenant une pluralité de supercondensateurs standards.

Le supercondensateur multipistes présente en outre des avantages par rapport au supercondensateur multibobines.

Notamment, le supercondensateur multipistes permet l'utilisation de couvercles et de barrettes de l'art antérieur pour la connexion électrique de deux supercondensateurs multipistes adjacents.

Par conséquent, le procédé de fabrication d'un supercondensateur multipistes est plus facile à adapter aux procédés existants de fabrication de supercondensateur que le procédé de fabrication d'un supercondensateur multibobines puisqu'il ne nécessite pas la mise en oeuvre d'étape de soudure ou de fabrication de couvercles spécifiques.

**Revendications**

1. Supercondensateur à double couche électrochimique, comprenant :

   - au moins deux complexes juxtaposés (1, 2) incluant chacun une électrode, lesdits complexes juxtaposés étant espacés d'une distance d selon un axe longitudinal et,
   - au moins un complexe commun (3) incluant une électrode, ledit complexe commun s'étendant en regard des deux complexes juxtaposés (1, 2) et séparé de ceux-ci par au moins un séparateur (4),

   le séparateur (4) et les complexes (1, 2, 3) étant enroulées ensemble en spire selon l'axe longitudinal pour former un élément bobiné,
   **caractérisé en ce que** le séparateur (4) est constitué d'au moins deux parties espacées d'une distance w inférieure à la distance d, chacune des parties séparant intégralement des complexes (1, 2, 3) en regard.

2. Supercondensateur selon la revendication 1, **caractérisé en ce que** la distance w est supérieure à 1 mm.

3. Supercondensateur selon l'une des revendications 1 à 2, **caractérisé en ce que** les électrodes des complexes (1, 2, 3) sont de natures différentes.

4. Supercondensateur selon l'une des revendications 1 à 3, **caractérisé en ce qu'**il contient deux complexes juxtaposés et un complexe commun, les deux complexes juxtaposés étant connectés vers l'extérieur.

5. Supercondensateur selon l'une des revendications 1 à 3, **caractérisé en ce qu'**il contient trois complexes connectés vers l'extérieur et juxtaposés deux à deux, et un complexe commun.

6. Supercondensateur selon l'une des revendications 1 à 3, **caractérisé en ce qu'**il contient deux ensembles d'un complexe connecté vers l'extérieur juxtaposé à un complexe commun, ces deux ensembles étant en regard de telle manière que le complexe commun du premier ensemble soit en regard du complexe connecté vers l'extérieur du deuxième ensemble.

7. Supercondensateur selon l'une des revendications précédentes, comprenant au moins deux complexes juxtaposés ayant au moins un complexe commun en regard séparé par au moins un séparateur et enroulés ensemble en spires de manière à former un premier élément bobiné, **caractérisé en ce qu'**il comprend en outre au moins deux autres complexes juxtaposés ayant au moins un autre complexe commun en regard séparé par au moins un autre séparateur, ces derniers étant enroulés ensemble en spires autour du premier élément bobiné de manière à former au moins un deuxième élément bobiné, ces éléments bobinés successifs étant séparés par un espace isolant électroniquement.

8. Supercondensateur selon la revendication 4, **caractérisé en ce qu'**il existe un complexe commun à deux éléments bobinés successifs.

**Patentansprüche**

1. Superkondensator mit elektrochemischer Doppelschicht, aufweisend:

   - wenigstens zwei nebeneinanderliegende Komplexe (1, 2), welche jeweils eine Elektrode aufweisen, wobei die nebeneinanderliegenden Komplexe in einem Abstand d gemäß einer Längsachse liegen, und
   - wenigstens einen gemeinsamen Komplex (3), welcher eine Elektrode enthält, wobei sich der gemeinsame Komplex den beiden nebeneinanderliegenden Komplexen (1, 2) gegenüberliegend erstreckt und von diesen durch wenigstens einen Separator (4) getrennt ist, wobei der Separator (4) und die Komplexe (1, 2, 3) zur Ausbildung eines Spulenelements in Windungen gemäß der Längsachse zusammengerollt sind,

**dadurch gekennzeichnet, dass** der Separator (4) aus wenigstens zwei Teilen gebildet ist, die in einem Abstand w, der kleiner als der Abstand d ist, liegen, wobei jeder der Teile gegenüberliegende Komplexe (1, 2, 3) vollständig trennt.

2. Superkondensator nach Anspruch 1, **dadurch gekennzeichnet, dass** der Abstand w größer als 1 mm ist.

3. Superkondensator nach einem der Ansprüche 1 bis 2, **dadurch gekennzeichnet, dass** die Elektroden der Komplexe (1, 2, 3) von unterschiedlicher Natur sind.

4. Superkondensator nach einem der Ansprüche 1 bis 3, **dadurch gekennzeichnet, dass** er zwei nebeneinanderliegende Komplexe und einen gemeinsamen Komplex enthält, wobei die beiden nebeneinanderliegenden Komplexe nach außen angeschlossen sind.

5. Superkondensator nach einem der Ansprüche 1 bis 3, **dadurch gekennzeichnet, dass** er drei nach außen angeschlossene und paarweise nebeneinanderliegende Komplexe und einen gemeinsamen Komplex enthält.

6. Superkondensator nach einem der Ansprüche 1 bis 3, **dadurch gekennzeichnet, dass** er zwei Einheiten eines nach außen angeschlossenen Komplexes, der neben einem gemeinsamen Komplex liegt, enthält, wobei die beiden Einheiten in einer solchen Weise einander gegenüberliegen, dass der gemeinsame Komplex der ersten Einheit dem nach außen angeschlossenen Komplex der zweiten Einheit gegenüberliegt.

7. Superkondensator nach einem der vorstehenden Ansprüche, welcher wenigstens zwei nebeneinanderliegende Komplexe aufweist, die wenigstens einen gegenüberliegenden gemeinsamen Komplex haben, der durch wenigstens einen Separator getrennt ist, und die in Windungen zusammengerollt sind, derart, dass ein erstes Spulenelement ausgebildet wird, **dadurch gekennzeichnet, dass** er ferner wenigstens zwei weitere nebeneinanderliegende Komplexe aufweist, die wenigstens einen weiteren gegenüberliegenden Komplex haben, der durch wenigstens einen weiteren Separator getrennt ist, wobei letztere in Windungen um ein erstes Spulenelement zusammengerollt sind, derart, dass wenigstens ein zweites Spulenelement ausgebildet wird, wobei die aufeinanderfolgenden Spulenelemente durch einen elektronisch isolierenden Zwischenraum getrennt sind.

8. Superkondensator nach Anspruch 4, **dadurch gekennzeichnet, dass** ein gemeinsamer Komplex mit zwei aufeinanderfolgenden Spulenelementen vorliegt.

**Claims**

1. A supercapacitor with a double electrochemical layer, comprising:

   - at least two juxtaposed complexes (1, 2), each one including one electrode, said juxtaposed complexes being spaced apart by a distance d, along a longitudinal axis, and,
   - at least one common complex (3) including one electrode, said common complex facing both juxtaposed complexes (1, 2) and being separated from the latter by at least one separator (4),

   the separator (4) and the complexes (1, 2, 3) being wound together in turns, along the longitudinal axis, in order to form a wound element, **characterized in that** the separator (4) consists of at least two portions spaced apart by a distance w of less than the distance d, each of the portions entirely separating the complexes (1, 2, 3) facing each other.

2. The supercapacitor according to claim 1, **characterized in that** the distance w is greater than 1 mm.

3. The supercapacitor according to any of claims 1 to 2, **characterized in that** the electrodes of complexes (1, 2, 3) are of different natures.

4. The supercapacitor according to any of claims 1 to 3, **characterized in that** it contains two juxtaposed complexes and a common complex, both juxtaposed complexes being connected to the outside.

5. The supercapacitor according to any of claims 1 to 3, **characterized in that** it contains three complexes connected to the outside and juxtaposed two by two, and a common complex.

6. The supercapacitor according to any of claims 1 to 3, **characterized in that** it contains two assemblies of a complex connected to the outside juxtaposed to a common complex, both of these assemblies facing each other so that the common complex of the first assembly is facing the complex connected to the outside of the second assembly.

7. The supercapacitor according to any of the preceding claims, comprising at least two juxtaposed complexes having at least one facing common complex separated by at least one separator and wound together in turns in order to form a first wound element, **characterized in that** it further comprises two other juxtaposed complexes having at least one other common facing complex separated by at least one other separator, the latter being wound together in turns around the first wound element in order to form at least a second wound element, these successive wound elements being separated by an electronically insulating space.

8. The supercapacitor according to claim 4, **characterized in that** there exists a complex common to two successive wound elements.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13a

FIG. 13b

FIG. 13c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9815962 A
- US 2006221551 A
- WO 2004075320 A
- EP 0786786 A
- EP 1801825 A
- CH 84526
- DE 3913611
- US 6493206 B
- US 2002093783 A